# EUROPÄISCHE PATENTSCHRIFT

(11) **EP 0 632 843 B1**
(45) Veröffentlichungstag und Bekanntmachung des Hinweises auf die Patenterteilung: **05.06.1996**
(21) Anmeldenummer: 93906624.7
(22) Anmeldetag: 26.03.1993
(51) Int. Cl.: C22B 7/02, C22B 13/02, C22B 19/04, C22B 19/34, C22B 1/24

(54) **VERFAHREN ZUM ENTFERNEN VON BLEI UND ZINK AUS HÜTTENWERKSSTAUB**
PROCESS FOR REMOVING LEAD AND ZINC FROM METALLURGICAL-WORKS DUST
PROCEDE D'ELIMINATION DU PLOMB ET DU ZINC CONTENUS DANS DES POUSSIERES D'USINES METALLURGIQUES

(30) Priorität: 26.03.1992 DE 4209891
(43) Veröffentlichungstag der Anmeldung: 11.01.1995
(73) Patentinhaber: SÜDWESTSTAHL GmbH, D-77694 Kehl am Rhein (DE)
(72) Erfinder: DISCHER, Heinz-Peter, D-7600 Offenburg (DE); GREINACHER, Ekkehard, D-3000 Hannover 61 (DE); BANSKI, Hans, D-8500 Nürnberg 60 (DE)
(74) Vertreter: Blumbach, Kramer & Partner
(86) Internationale Anmeldenummer: EP9300747
(87) Internationale Veröffentlichungsnummer: WO9319213

(56) Entgegenhaltungen:
- EP-A- 0 176 499
- DE-A- 3 131 898
- DE-A- 3 427 631
- US-A- 4 673 431
- DATABASE WPI Week 26, 1988 Derwent Publications Ltd., London, GB; AN 88-179879 & JP-A-63 117 911 (INAZAKI) 21. Mai 1988

## Beschreibung

Die Erfindung betrifft ein Verfahren der im Oberbegriff des Patentanspruchs 1 angegebenen Art.

Bei der Eisen- und Stahlherstellung fallen, z.B. in Elektrofiltern zur Entstaubung der Abgase aus Konvertern oder in Elektroöfen, feinkörnige Stäube an, die hauptsächlich aus Eisen bestehen, jedoch auch Zink, Blei und Alkalien enthalten. Problematisch ist die Entsorgung derartiger Stäube.

Die an sich naheliegenste Art der Entsorgung, nämlich die Deponierung dieser Reststoffe, wird aus Gründen des Umweltschutzes, aber auch wegen der ständig steigenden Kosten und der schnell schrumpfenden Kapazitäten der Sonderabfalldeponien immer schwieriger. Zudem gehen bei der Deponierung beträchtliche Mengen von Eisen, Zink und Blei ungenützt verloren.

Diese Situation zwang die betroffenen Firmenkreise, eine wirtschaftliche Aufbereitung der Stäube zu entwickeln. Auf der einen Seite sind hydrometallurgische Verfahren zur Aufbereitung der Stäube, wie alkalische Laugung, bekannt. Derartige Verfahren bringen aber aufgrund des großen Wassereinsatzes Abwasserprobleme mit sich und erreichen nur geringe Raum-/Zeitausbeuten. Auf der anderen Seite sind pyrometallurgische Verfahren bekannt. Bei diesen Verfahren werden NE-Metalle, in der Hauptsache Zink und Blei, und damit zwangsläufig auch Chloride und Alkali angereichert. Mehrere derartige Verfahren, z. B. das Plasma-Verfahren, ermöglichen mit der Anreicherung durch NE-Metalle eine direkte Gewinnung von Zink- und Blei-Metall. Dabei fällt aber in beträchtlichem Umfang Chlorid-Krätze an, die sehr schwierig zu entsorgen ist.

Am geläufigsten für die Aufarbeitung der Stäube ist derzeit eine Kombination des Wälzverfahrens und des Imperial-Smelting-Verfahrens.

Bei dem bekannten Wälzverfahren wird in einen schwach geneigten, langsam rotierenden Drehrohrofen ein Gemisch aus Sand, Koks und Hüttenwerksstaub von einer Seite kontinuierlich eingebracht. Von der anderen Seite wird kontrolliert heiße Luft zugeführt. Im Drehrohrofen treten bei ca. 1250°C aus dem Gemisch Dämpfe aus, welche in der Ofenatmosphäre oxidieren, um unter anderem Zink- und Bleioxide zu bilden. Diese Oxid-Dämpfe werden einer Kühlvorrichtung zugeführt, dort abgekühlt und anschließend zu einem elektrischen Abscheider geleitet, wo das Zink und Blei enthaltende Wälzoxid abgeschieden wird.

Vorzugsweise wird anschließend das Wälzoxid brikettiert und dann zusammen mit einem Reduktionsmittel, insbesondere Koks, dem bekannten Imperial-Smelting-Verfahren unterzogen. In einem Schachtofen, in dem sich dann Wälzoxid und Koks befinden, werden sowohl Zinkdampf als auch Rohblei gewonnen und Schlacke erzeugt. Der Zinkdampf wird aus dem Schachtofen zu einem Kondensator geleitet, wo er auf einen intensiven Schauer von Bleitropfen trifft und dort kondensiert. Die dadurch entstehende Blei-Zink-Lösung wird dabei laufend in ein Kühlsystem gepumpt und dort abgekühlt; das bei der Abkühlung unter die Sättigungsgrenze auf der Bleioberfläche angesammelte Rohzink wird abgezweigt und der Rest, also im wesentlichen das Blei, wieder dem Sprühkondensator zugeführt.

Mit dem Wälzverfahren können zwar große Durchsätze erreicht werden und in dem sich anschließendem Imperial-Smelting-Verfahren Zink und Blei aus dem Hüttenwerksstaub wiedergewonnen werden, jedoch sind die für das jeweilige Verfahren notwendigen Anlagen sehr kostenintensiv. Sie müssen, um wirtschaftlich arbeiten zu können, immer voll ausgefahren werden. Dabei fallen erhebliche Transportkosten an, um die Hüttenwerksstäube aus den einzelnen Stahlwerken in die Wälzanlage zu bringen und anschließend das Wälzoxid in die zentrale Imperial-Smelting-Anlagen. Der Transport wird noch erschwert durch Dioxin- und Furangehalte, die möglicherweise in dem aufzuarbeitendem Material vorhanden sind.

Als von Nachteil erweist sich, daß das in den Hüttenwerksstäuben enthaltene Chlorid und Alkali im Wälzverfahren angereichert wird, so daß die Weiterverarbeitung des Wälzoxids auf die nach dem Imperial-Smelting-Verfahren arbeitenden Zink-Hütten beschränkt ist. Dieser Prozeß ist aber hinsichtlich der Wiedergewinnung des Zinks sehr aufwendig, da lediglich 10 bis 20 Vol-% Wälzoxid bei 80 bis 90 Vol-% Zinkerz verarbeitbar sind.

Als aufwendig erweist sich auch, daß beim Wälzverfahren für die Bildung geeigneter Schlacken mit Zuschlägen von ca. 20 bis 25%, bezogen auf den Hüttenwerksstaub, gearbeitet werden muß. Dabei ist die anfallende Schlacke, also der Wälzaustrag, nicht immer als Baustoff geeignet bzw. zugelassen, so daß dieser wiederum deponiert werden muß.

Nachteilig ist weiterhin der für das Aufarbeitungsverfahren erforderliche Energieaufwand, insbesondere weil große Massen in Form der mit feuerfestem Material ausgekleideten Drehrohre gelagert und bewegt werden müssen. Die möglicherweise anfallenden Reparaturen an der Mechanik der Drehrohre und den Feuerfestauskleidungen sind sehr aufwendig. Beispielsweise müssen bei Beschädigung der feuerfesten Auskleidungen diese durch Zerlegen des Drehrohrs ausgetauscht werden und als Sonderabfall auf Sonderabfalldeponien entsorgt werden.

Durch die DE-37 05 787-A1 ist ein Verfahren zum Entfernen von Bleioxid, das als lösliche Verunreinigung von Zinkoxid in wiedergewonnenem Abfallstaub vorliegt, bekannt geworden, bei dem in einer ersten Stufe der Abfallstaub in einer oxidierenden Atmosphäre auf eine Temperatur erhitzt wird, die ausreicht, um Bleioxiddämpfe zu bilden, die Bleioxiddämpfe von der flüssigen oder gesinterten, Zinkoxid enthaltenden Masse abgetrennt und verfestigt werden und das erstarrte Bleioxid wiedergewonnen wird. Die oxidierte, mit Zinkoxid beladene Restmasse wird in reduzierender Atmosphäre auf eine Temperatur erhitzt, die ausreicht um das Zinkoxid unter Bildung von Zinkdämpfen zu reduzieren. Die Zinkdämpfe werden von der reduzierten Restmasse abgetrennt und die erstarrten Zinkdämpfe werden gefiltert.

Das Erhitzen des zu behandelnden Materials erfolgt in den beiden Stufen direkt. Die Dämpfe des Bleioxids werden in der ersten Stufe aus der Oxidationskammer mit dem Brenngas abgezogen, die Zinkdämpfe werden zusammen mit den Abgasen aus der Reduktionskammer ausgetragen. Die Erhitzung des vorzugsweise pelletisierten Abfallstaubes wird in der ersten Stufe bei einer Temperatur ausgeführt, die oberhalb der Verdampfungstemperatur von Bleioxid, d.h. oberhalb von 1475° C liegt. Die Erhitzung der oxidierten Restmasse in der reduzierenden Atmosphäre wird vorzugsweise bei einer Temperatur von etwa 980° C durchgeführt und soll nicht höher als 1093° C liegen.

Für die Entfernung von Blei werden bei dem in der genannten Offenlegungsschrift beschriebenen Verfahren hohe Temperaturen als notwendig angesehen - als bevorzugter Bereich werden 1482° C bis 1538° C genannt - so daß für das bekannte Verfahren ein verhältnismäßig hoher Aufwand an Energie und Ofenwerkstoffen erforderlich ist. Durch die direkte Aufheizung des zu behandelnden Materials und die Verwendung der Abgasströme des Brennmaterials für den Austrag der Schadstoffe aus den Öfen ist wegen der großen Abgasmenge bei vertretbarem Energieaufwand auch keine schnelle Abkühlung d.h. ein Abschrecken der Ofenabgase möglich, so daß es zu Dioxin Rekombinationen kommen kann.

Der Erfindung liegt die Aufgabe zugrunde, ein Verfahren der im Oberbegriff des Patentanspruchs 1 angegebenen Art zu schaffen, bei dem unter Vermeidung der genannten Nachteile eine einfache, kostengünstige und im wesentlichen vollständige Wiedergewinnung, also ein Recycling, von Zink, Blei und Eisen aus den diese Metalle enthaltenden Hüttenwerksstäuben möglich ist. Der Energieaufwand und der Materialverschleiß sollen reduziert werden.

Ferner soll die Abgasmenge des Prozeßgases gering gehalten werden können, so daß durch Abschrecken des Gases eine Dioxin Rekombination vermeidbar ist. Schließlich soll eine Anlage zur Durchführung des erfindungsgemäßen Verfahrens verfügbar gemacht werden.

Die Aufgabe ist erfindungsgemäß durch die im Patentanspruch 1 angegebenen Verfahrensschritte gelöst. Vorteilhafte Ausgestaltungen des Verfahrens sind in den Unteransprüchen angegeben.

Der Erfindung liegt die Erkenntnis zugrunde, daß das zu entfernende Element Blei im Hüttenstaub hauptsächlich in Form von Alkali-Chlorid-Komplexen vorliegt, die bei niedrigen Temperaturen (850° C) verdampfen und abgetrennt werden können. Damit ist abweichend vom genannten Stand der Technik eine energiesparende, für die Apparatur weniger belastende Bleiabtrennung bei niedrigen Temperaturen möglich. Der bevorzugte Temperaturbereich liegt zwischen 900° C und 1100° C, also deutlich unter der im Stand der Technik angegebenen Mindesttemperatur von 1482° C.

Bei dem Verfahren nach der Erfindung erfolgt die Aufarbeitung in folgenden Verfahrensschritten:

Zunächst wird der Hüttenwerksstaub in einer, vorzugsweise 1000 bis 1100°C heißen Ofenatmosphäre eines (zweiten) Ofens zur Bleiabtrennung thermisch behandelt. Unter kontinuierlichem Umwälzen des Staubs bzw. der Staub-Pellets verweilt dieser dort bis sich die Bleichlorid- und Bleialkali-Komplexe nahezu vollständig aus dem Staub verflüchtigt haben. Dies dauert erfahrungsgemäß etwa eine Dreiviertelstunde. Dabei wird kontinuierlich oder intermittierend ein Spülgasstrom durch den Ofen geleitet, wodurch der im Ofen abgeschiedene Blei-chlorid- und Blei-Alkali-Dampf aus diesem zu einer Abkühl- und Filtervorrichtung ausgetragen wird.

Das so behandelte zinkhaltige Restmaterial wird dann vermischt mit einem festen, feinkörnigen Reduktionsmittel, insbesondere Kohle, in einer weiteren, insbesondere 1150° C bis 1350°C heißen Ofenatmosphäre eines (dritten) Ofens zur Zink-abtrennung thermisch behandelt und dort kontinuierlich umgewälzt. Dadurch wird das in dem Hüttenstaub enthaltene Zinkoxid reduziert. Der Staub verweilt so lange in dem Drehrohrofen bis sich Zink als Zinkmetalldampf nahezu vollständig aus dem Staub in die sauerstoffhaltige Ofenatmosphäre in der das Zinkmetall zu Zinkoxid oxidiert, verflüchtigt hat. Dies dauert erfahrungsgemäß eine halbe Stunde bis zwei Stunden. Dabei wird wiederum kontinuierlich oder intermittierend ein Spülgasstrom durch den Ofen geleitet, wodurch das Zinkoxid aus dem Ofen ausgetragen wird. Das mit dem Zinkoxid beladene Spülgas wird abgekühlt und gefiltert.

In dem ersten Verfahrensschritt werden also zunächst diejenigen Elemente, die sich auf eine spätere Verwendung des Staubs als Recyclingprodukt nachteilig auswirken, zusammen mit Blei aus dem Staub entfernt; dabei handelt es sich im wesentlichen um Chloride und chloridische Komplexe des Bleis und Alkalimetalle d.h., im wesentlichen um PbCl₂, KPb₂Cl₅ und NaCl, KCl. Diese Chlor-Alkali-Blei-Fraktion kann in bekannter Weise hydrometallurgisch zu Bleisulfat aufgearbeitet und es können die übrigen Schwermetalle als Sulfide ausgefällt werden. Die restliche klare Alkali-Chlorid-Lauge, die dann im wesentlichen Kalium enthält, kann in der Landwirtschaft als Dünger oder zur Aufstockung des Kaliumwertes bei der Aufarbeitung von Aluminiumabdecksalzen eingesetzt werden.

Der von der chloridischen Fraktion weitgehend befreite Hüttenwerksstaub enthält im wesentlichen noch die Wertstoffe Eisen und dessen Verbindungen sowie Zinkoxid. Im zweiten Verfahrensschritt werden diese Wertstoffe weitgehend voneinander getrennt. Die dabei gewonnene Zink-Fraktion weist dann nur noch solche Eisen-, Chlor-, Alkali- und Bleiwerte auf, die den üblichen Erzabbränden entsprechen. Dieses Produkt kann in Zinkhütten und bei Herstellern von Zinkverbindungen in unterschiedliche Verfahren eingebracht werden und ist nicht nur auf den Einsatz in Zinkhütten angewiesen, die das Imperial-Smelting-Verfahren anwenden. Auch bei einer Weiterverarbeitung der Zink-Fraktion in der Zink-Elektrolyse werden aufgrund des geringen Resteisengehalts in der Zink-Fraktion Eisenverbindungen, wie Jarosit, vermieden, die auf Sonderdeponien abgelagert werden müßten.

Die aus den aufgearbeiteten Stäube gewonnene Eisen-Fraktion kann direkt dem Stahlwerksprozeß zugeführt werden.

Zweckmäßig ist es aber auch, den Hüttenwerksstaub, bevor er dem zweiten Ofen zur Bleiabtrennung zugeführt wird, in einer bis zu 600°C heißen Ofenatmosphäre eines ersten Ofens vorzuwärmen und zu trocknen. Dadurch werden hohe Temperaturschwankungen mit dem Einbringen des Hüttenwerkstaubs in die Ofenatmosphäre des zweiten Ofens vermieden. Desweiteren wird in dem Hüttenwerksstaub möglicherweise enthaltene Feuchtigkeit entzogen und der Staub somit getrocknet. Eine negative Beeinflussung in den dann folgenden Verfahrenschritten durch Wasserdampf wird dadurch ausgeschlossen.

Eine vorteilhafte Ausgestaltung der Erfindung besteht auch darin, daß die Öfen, in denen die Hüttenwerksstäube aufbereitet werden, indirekt beheizt werden. Zum einen ist dadurch eine mehrfache Wärmeausnutzung und eine einfache Wärmerückgewinnung möglich. Zum anderen wird die Verunreinigung der im Ofen verdampfenden Produkte durch zusätzlichen Staub der Heizgase gering gehalten und die Gasmenge des Spülgases nicht mit einer zusätzlichen Gasmenge des Heizgases belastet. Es wird dann für den Austrag der Bleiverbindungen jeweils nur ein geringer steuerbarer Trägergasstrom eines Spülgases benötigt, der nach Mengenfluß, aber auch hinsichtlich seiner Eigenschaften, wie Oxidation und Reduktion optimiert werden kann.

Da die Gasmenge des Spülgases bei Anwendung der indirekten Beheizung gering gehalten werden kann, ist auch mit geringem Energieaufwand ein plötzliches Abkühlen des heißen Spülgasstromes nach dem Verlassen der Öfen möglich, wodurch die Gefahr einer Dioxin-Rekombination vermieden wird.

Die Öfen werden vorzugsweise als Drehrohröfen ausgebildet, wobei das indirekt beheizte Drehrohr des ersten Ofens für die Vorwärmung und Trocknung des Einsatzmaterials vorzugsweise aus Metall, insbesondere hitzebeständiger Stahllegierung besteht, während die indirekt beheizten Drehrohre des zweiten und dritten Drehrohrofens zur Blei- und Zink-Abtrennung wegen der höheren Temperaturen vorzugsweise aus Oxidkeramik bestehen. Die keramische Wand des Drehrohrs soll hierbei möglichst dünn ausgebildet sein, um den Wärmedurchgangswiderstand gering zu halten und unzulässig hohe Temperaturgradienten auszuschließen. Als besonders vorteilhaft haben sich hier plasmagespritzte Keramikrohre erwiesen. Da bei dem erfindungsgemäßen Verfahren in der Stufe der Bleiabtrennung bei Temperaturen unterhalb 1300° C gearbeitet wird, besteht im Gegensatz zu dem einleitend beschriebenen bekannten Verfahren nicht die Gefahr, daß klebrige und flüssige Phasen des Einsatzmaterials entstehen, die in die poröse Ofenwand eindringen und diese zerstören könnten.

Die indirekt beheizte Wand der Keramikrohre ist die heißeste Fläche im Prozessraum. Die durch den Prozessraum hindurchgeleiteten Spülgasströme sorgen für eine Abschreckung unmittelbar nach der heißesten Zone, so daß die gefürchtete Ausbildung von Ringen aus Kondensaten und Sublimaten vermieden und die Kosten für Wartungsarbeiten verringert werden können.

Weitere vorteilhafte Ausgestaltungen bilden den Gegenstand der Unteransprüche bzw. werden nachstehend zusammen mit der Beschreibung der bevorzugten Ausführung der Erfindung anhand der Figuren näher dargestellt. Es zeigen:
- Fig. 1: eine schematische Darstellung der einzelnen Verfahrensschritte eines Ausführungsbeispiels der Erfindung und
- Fig. 2: eine schematische Darstellung der Gasströme und des Materialflusses des Ausführungsbeispiels.

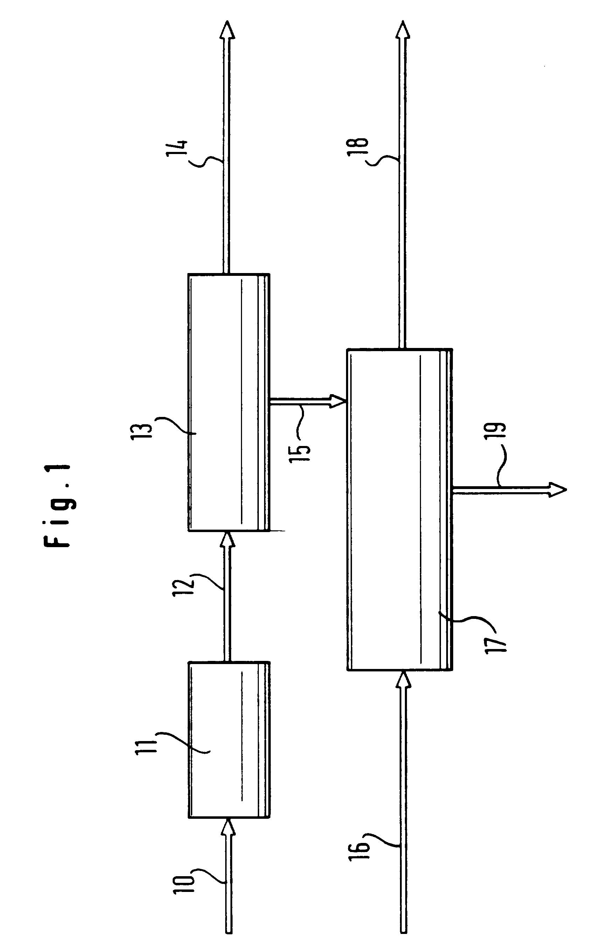

In Fig. 1 sind schematisch drei Verfahrensabschnitte dargestellt.

Der aus einem Elektroofen anfallende, unter anderem Zink und Blei enthaltende Hüttenwerksstaub wird zunächst in bekannter Weise pelletiert, d.h. der feinkörnige Staub wird stückig gemacht.

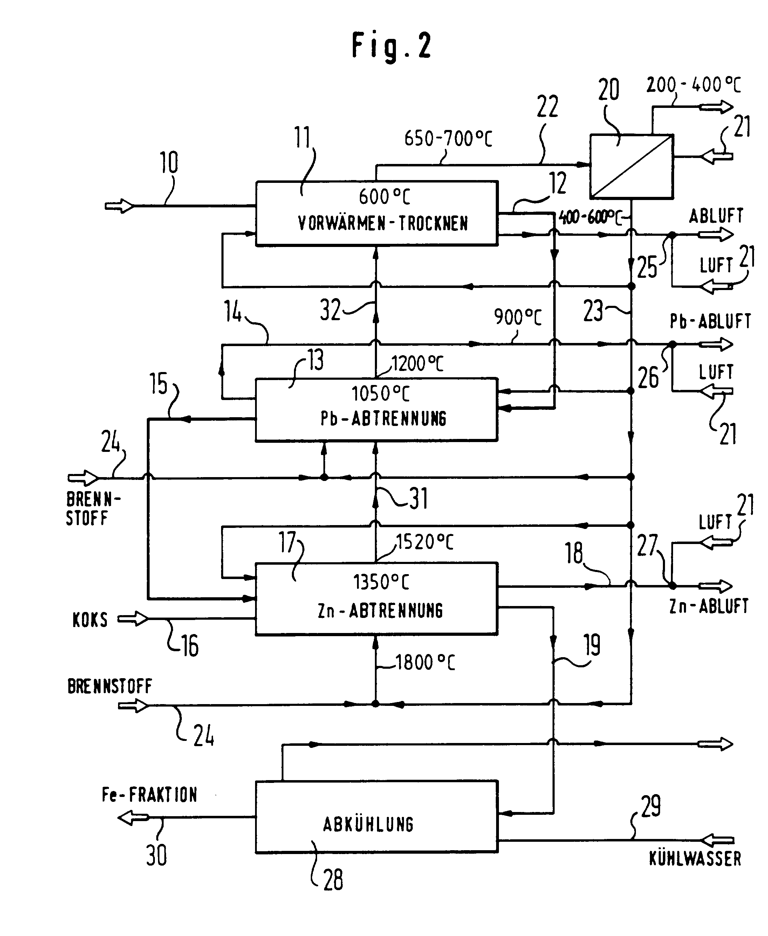

Dieser zu Pellets 10 aufbereitete Hüttenwerksstaub wird dann in einen Drehrohrofen 11 gegeben und dort bis zu 600°C indirekt aufgeheizt. Dabei werden die Pellets 10 durch kontinuierliches Drehen des Drehrohrs des Drehrohrofens 11 laufend umgewälzt. Die in den Pellets 10 enthaltene Feuchtigkeit, die insbesondere durch das Pelletieren eingebracht wurde, dampft dabei nahezu vollständig aus, jedoch ohne die Form der Pellets 10 zu zerstören. Der Dampf wird durch einen Heißluftstrom aus dem ersten Drehrohr verdrängt, wobei hierzu anhand von Fig. 2 noch näher eingegangen wird.

Das Drehrohr des Drehrohrofens 11 kann aus Metall, insbesondere hitzebeständiger Stahllegierung, bestehen, da der Drehrohrofen 11 lediglich bis zu 600°C aufgeheizt wird und somit eine Verzunderung des Dreh-rohrs, die etwa bei 900°C beginnen würde, ausgeschlossen ist.

Die vorgewärmten aus dem Drehrohrofen 11 kommenden Pellets 12 werden nun einem zweiten Drehrohrofen 13 zugeführt und dort auf 900° C bis 1100° C, vorzugsweise auf 1000° C bis 1100°C indirekt aufgeheizt. In dem zweiten Drehrohrofen 13 ist das Drehrohr aus Keramik gebildet. Ein Keramikdrehrohr weist im Vergleich zu einem mit einer feuerfesten, schamottartigen Auskleidung versehenen herkömmlichen Drehrohr, ein wesentlich geringeres Gewicht auf und ist somit leichter zu handhaben. Weiterhin ist Keramik auch temperaturschock- und temperaturwechselbetändiger; derartige Drehrohre sind auch gegen Säuren und aggressive Medien, wie Halogenide (z.B. Chlor), korrosionsbeständig.

Unter kontinuierlichem Drehen des Drehrohrs verbleiben die Pellets 12 ungefähr eine Stunde im zweiten Drehrohrofen 13. Dort dampfen insbesondere Blei-Chlor-, Blei-Alkali- und andere Alkali und Chlorverbindung aus. Es werden also vor allem diejenigen Elemente und Verbindungen entfernt, die sich bei den späteren Recyclingprodukten (Zink und Eisen) nachteilig auswirken würden.

Der in dem zweiten Drehrohrofen 13 entstehende, die Bleikomponenten enthaltende Dampf 14 wird von einem Heißluftstrom erfaßt, der durch einen Gaseinlaß auf der einen Stirnseite des Drehrohrs zugeführt wird, an der auch die heißen Pellets 12 in den Drehrohrofen 13 eingebracht werden. Die Spülgasströme verhindern auch, daß beladene Gase, die die eigentliche, heiße Behandlungszone verlassen, kältere Wandungen berühren können. An diesen Wandflächen bestünde die Gefahr der Kondensation und Sublimation von Verbindungen und damit die Gefahr von Verstopfungen. Die aus dem Drehrohrofen 13 austretende Heißluft mit dem die Bleikomponente enthaltenden Dampf 14 wird durch einen Gasauslaß an der anderen Stirnseite des Drehrohrs einer hier nicht dargestellten Kühl- und dann einer Filtervorrichtung zugeführt, wobei die dort abgeschiedene Fraktion dann in bekannter Weise weiterverarbeitet wird.

Die so aufbereiteten Pellets 15, die nun im wesentlichen aus Eisen und Zink bestehen, werden zusammen mit Kohle 16 einem dritten, ebenfalls indirekt beheizten Drehrohrofen 17 zugeführt, dort unter kontinuierlichem Drehen des ebenfalls keramischen Drehrohrs umgewälzt, auf 1100° C bis 1400° C, vorzugsweise auf 1150°C bis 1350°C aufgeheizt und mit körniger oder staubförmiger Kohle 16 durchmischt. Dabei wird das in den aufbereiteten Pellets 15 enthaltene Zinkoxid zunächst reduziert und dampft als Zinkmetalldampf aus den Pellets 15 in die darüberliegende sauerstoffhaltige Ofenatmosphäre. Hier wird das aus der Kohle 16 aufsteigende Kohlenmonoxid zu Kohlendioxid und das Zinkmetall zu Zinkoxid oxidiert. Ein Heißluftstrom, der durch einen Gaseinlaß auf der einen Stirnseite des Drehrohrofens 17, an der auch die Pellets 15 eingebracht werden, in den Drehrohrofen 17 einströmt, trägt die Zink-Fraktion 18 über einen Gasauslaß an der anderen Stirnseite des Drehrohrofens 17 zum raschen Abkühlen in eine hier nicht dargestellten Kühl- und dann in eine Filtervorrichtung. Die in der Filtervorrichtung abgeschiedene Zink-Fraktion 18 wird dann in bekannter Weise weiterverarbeitet.

Die derart abgeschiedene Zink-Fraktion 18 enthält nur geringe Eisen-Gehalte. Somit entfällt das Entsorgungsproblem hinsichtlich Jarosit/Goethit bei einer möglicherweise weiteren Aufbereitung der Zink-Fraktion 18 durch Elektrolyse.

In den dritten Drehrohrofen 17 wird Kohle 16 mindestens in der Menge eingebracht, die notwendig ist zur Reduktion von Zinkoxid, zweckmäßiger Weise jedoch in der Menge, die notwendig ist zur Reduktion auch von in den Staubpellets 15 enthaltenem Ferrioxid (Fe₂O₃).

Durch die thermische Behandlung in dem zweiten und dritten Drehrohrofen 13 und 17 werden möglicherweise in den Staubpellets 12 und 15 vorhandene und aus diesen austretende Dioxine und Furane bis unter die Nachweisgrenze zersetzt. Durch die rasche Abkühlung der Abgase, sowohl des die Bleikomponente enthaltenden Dampfs 14 als auch der Zink-Fraktion 18, wird eine Rekombination der Dioxine und Furane verhindert.

Im Drehrohrofen 17 werden, wie oben bereits erwähnt, höhere Eisenoxide reduziert, so daß die entstehende Eisen-Fraktion 19 einfach in Stahlwerksprozesse einbringbar ist.

Fig. 2 zeigt ebenfalls in schematischer Darstellung die Gasströme und Materialflüsse.

Alle drei Drehrohröfen 11, 13 und 17 sind, wie oben erwähnt, indirekt beheizt. Dadurch ist eine mehrfache Wärmeausnutzung und eine einfache Wärmerückgewinnung möglich, wie dies im folgenden noch verdeutlicht wird.

Um diese Wärmeausnutzung und -rückgewinnung zu erreichen, wird einem Wärmetauscher einer Lufterwärmungsvorrichtung 20 Frischluft 21 und Abluft 22 aus der indirekten Beheizung des ersten Drehrohrofens 11 zugeführt. Die aus dem ersten Drehrohrofen 11 kommende Abluft 22 hat dabei eine Temperatur von ungefähr 660 bis 700°C und wird durch den Wärmetauscher auf 200 bis 400°C abgekühlt, wohingegen die Frischluft durch den Wärmetauscher der Vorheizvorrichtung 20 auf 400 bis 600°C aufgeheizt wird.

Die derart erwärmte Heißluft 23 wird als Prozeß- bzw. Spülgas jedem der drei Drehrohröfen 11, 13 und 17 zugeführt. Weiterhin wird die Heißluft 23 zusammen mit Erdgas 24 in die Heizungskammern des zweiten und dritten Drehrohrofens 13 und 17 gesteuert eingeleitet, wo das Erdgas zum Aufheizen des Drehrohrofens 13 bzw. 17 verbrennt.

Die beim Beheizen des dritten Drehrohrofens 17 anfallende, etwa 1520°C heiße Abluft 31 der Heizungskammer, wird zusätzlich den Heizungskammern des zweiten Drehrohrofens 13 zugeführt und heizt dort ergänzend zu dem gesteuert zugeführten und verbrennenden Erdgas 24 den zweiten Drehrohrofen 13 auf.

Die ungefähr 1200°C heiße Abluft 32 aus den Heizungskammern des zweiten Drehrohrofens 13 erwärmt dann ausschließlich den ersten Drehrohrofen 11 und wird dann als Abluft 22, wie bereits oben erwähnt, dem Wärmetauscher der Vorheizvorrichtung 20 zugeführt.

Die als Prozeß- bzw. Spülgas dem ersten Drehrohrofen 11 zugeleitete Heißluft 23 trägt die in dem ersten Drehrohrofen 11 aus den Staubpellets 10 ausdampfende Feuchtigkeit zu einer ersten Kühlvorrichtung 25. Dort wird die Heißluft rasch abgekühlt und die Feuchtigkeit kondensiert.

Entsprechend wird das beim zweiten Drehrohrofen 13 als Heißluft 23 eintretende und mit Chlor-Alkali-Blei-Dampf beladene Spülgas 14 nach dem Austritt aus dem Drehrohrofen 13 einer zweiten Kühlvorrichtung 26 zugeführt. Das beim dritten Drehrohrofen 17 als Heißluft eintretende und nach dem Austritt die Zink-Fraktion 18 enthaltende Spülgas wird einer dritten Kühlvorrichtung 27 zugeleitet. In den Kühlvorrichtungen 25, 26 und 27 wird das Spülgas jeweils rasch abgekühlt, indem den Kühlvorrichtungen 25, 26 bzw. 27 jeweils Frischluft 21 zugeführt wird. Die Kühlvorrichtungen können als indirekte oder direkte Kühlvorrichtungen ausgebildet sein. Im letzten bevorzugten Fall wird die Frischluft in den Spülgasstrom geleitet, wie dies in Fig. 2 dargestellt ist.

Wie bereits zu Fig. 1 dargelegt, werden die Pellets 10 zunächst dem ersten Drehrohrofen 11 zugeführt, dort getrocknet und vorgewärmt. Die getrockneten und vorgewärmten Pellets 12 gelangen dann in den zweiten Drehrohrofen 13, in dem im wesentlichen Chlor, Alkali und Blei aus den Pellets 12 ausdampft. Die so aufbereiteten Pellets 15 werden schließlich in den dritten Drehrohrofen 17 zusammen mit feinkörniger Kohle 16 eingebracht. Hier wird in der beschriebenen Weise die Zink-Fraktion 18 und die Eisen-Fraktion 19 gebildet. Die Eisen-Fraktion 19 wird in eine weitere Kühlvorrichtung 28 eingebracht und dort unter Zuhilfenahme von Kühlwasser 29 indirekt abgekühlt.

Die abgekühlte Eisen-Fraktion 30 wird dann dem Stahlwerksprozeß wieder zugeführt.

Durch die indirekte Beheizung der Drehrohröfen 11, 13 und 17 ist eine mehrfache Wärmeausnutzung und eine Wärmerückgewinnung möglich. Vorzugsweise werden im Heizkreislauf nur gasförmige Brennstoffe, die zu keiner Staubbelastung führen, wie Erdgas, eingesetzt. Durch die indirekte Beheizung werden die Verunreinigungen der Prozeß- bzw. Spülgase im Drehrohrofen 11, 13 und 17 gering gehalten.

Durch dieses Verfahren kann weiterhin auf Zuschläge zur Bildung von Schlacken, die entsorgt werden müßten, verzichtet werden. Zudem kann das erfindungsgemäße Verfahren in kompakten kleinen Einheiten betrieben werden. Es eignet sich vor allem für eine dezentrale Aufbereitung des Hüttenwerksstaubes in jedem Stahlwerk, wodurch Transportkosten nahezu entfallen.

## Patentansprüche

1. Verfahren zum Entfernen von Blei und Zink aus Hüttenwerksstaub, insbesondere aus Elektroofenstaub, bei dem
das zu behandelnde Material eventuell in einem ersten Ofen (11) vorgewärmt, dann einem zweiten Ofen (13) zugeführt, hier durch thermische Behandlung die Bleikomponente verdampft, diese mittels eines Spülgasstromes aus dem Ofen entfernt und
der mit der Bleikomponente beladende Spülgasstrom abgekühlt und gefiltert wird,
dann das zinkhaltige Restmaterial in einem dritten Ofen (17) unter reduzierenden Bedingungen thermisch behandelt, hierbei Zinkoxid unter Bildung von Zinkdämpfen reduziert, die Zinkkomponente mittels eines Spülgasstromes aus dem Ofen entfernt und der mit der Zinkkomponente beladene Spülgasstrom abgekühlt und gefiltert wird,
dadurch **gekennzeichnet,**
daß bei Einsatz eines Hüttenstaubs, der Blei-Alkaliverbindungen oder Bleichloride enthält, das zu behandelnde Material im zweiten Ofen (13) nur bis zum Verdampfen der Blei-Alkaliverbindungen bzw. Bleichloride erhitzt wird und diese mit dem Spülgasstrom ausgetragen werden.

2. Verfahren nach Anspruch 1, dadurch **gekennzeichnet,** daß das zinkhaltige Restmaterial im dritten Ofen (17) vermischt mit einem körnigen oder staubförmigen Reduktionsmittel, insbesondere Kohle, thermisch behandelt und oberhalb des Restmaterial-Reduktionsmittelgemisches eine sauerstoffhaltigen Atmosphäre aufrecht erhalten wird, in der das verdampfte Zink zu Zinkoxid oxidiert und dieses mit dem Spülgasstrom ausgetragen wird.

3. Verfahren nach Anspruch 1 oder 2, dadurch **gekennzeichnet,** daß das zu behandelnde Material vor dem Einbringen in den zweiten Ofen (13) im ersten Ofen (11) vorgewärmt und getrocknet wird.

4. Verfahren nach einem der Ansprüche 1 bis 3, dadurch **gekennzeichnet,** daß der Hüttenwerksstaub vor dem Einbringen in den zweiten bzw. ersten Ofen (13 bzw. 11) pelletisiert wird.

5. Verfahren nach einem der Ansprüche 1 bis 4, dadurch **gekennzeichnet,** daß das Material in wenigstens einem der Öfen (13, 17, 11) über Heizkammern indirekt beheizt wird.

6. Verfahren nach einem der Ansprüche 1 bis 5, dadurch **gekennzeichnet,** daß das Material bei der thermischen Behandlung der einzelnen Stufen in wenigstens einem Drehrohrofen (11, 13, 17) umgewälzt wird.

7. Verfahren nach Anspruch 6, dadurch **gekennzeichnet,** daß in Verfahrensstufen mit Temperaturen oberhalb von 700° C das Umwälzen des Materials in einem keramischen Drehrohr eines Drehrohrofens (13, 17) erfolgt.

8. Verfahren nach Anspruch 6, dadurch **gekennzeichnet,** daß in Verfahrensstufen mit einer Temperatur unterhalb 700° C das Umwälzen des Materials in einem metallischen Drehrohr eines Drehrohrofens (11) erfolgt.

9. Verfahren nach einem der Ansprüche 1 bis 8, dadurch **gekennzeichnet,** daß die Behandlungstemperatur im zweiten Ofen zwischen 900° C und 1100° C liegt.

10. Verfahren nach einem der Ansprüche 1 bis 9, dadurch **gekennzeichnet,** daß die Behandlungszeit im zweiten Ofen (13) bei einer halben Stunde bis eineinhalb Stunden liegt.

11. Verfahren nach einem der Ansprüche 1 bis 10, dadurch **gekennzeichnet,** daß die Behandlungstemperatur im dritten Ofen (17) zwischen 1100°C und 1400°C liegt.

12. Verfahren nach einem der Ansprüche 1 bis 11, dadurch **gekennzeichnet,** daß die Behandlungszeit im dritten Ofen bei einer halben Stunde bis zwei Stunden liegt.

13. Verfahren nach einem der Ansprüche 1 bis 12, dadurch **gekennzeichnet,** daß wenigstens einem der Öfen (11, 13, 17) erwärmtes Spülgas, insbesondere Heißluft (23), zugeführt wird.

14. Verfahren nach Anspruch 5, dadurch **gekennzeichnet,** daß das Spülgas mittels eines indirekten Wärmtauschers (20) durch die heiße Abluft einer Heizkammer eines Ofens (11) erwärmt wird.

15. Verfahren nach einem der Ansprüche 1 bis 14, dadurch **gekennzeichnet,** daß die heiße Verbrennungsabluft aus den Heizkammern des dritten Ofens (17) den Heizkammern des zweiten und/oder ersten Ofens (13 bzw. 11) als Heizgas zugeführt wird.

16. Verfahren nach Anspruch 5, dadurch **gekennzeichnet,** daß die heiße Verbrennungsabluft aus den Heizkammern des zweiten Ofens (13) den Heizkammern des ersten Ofens (11) als Heizgas zugeführt wird.

## Claims

1. A method of removing lead and zinc from foundry dust, in particular from electric furnace dust, wherein
the material to be treated is possibly preheated in a first furnace (11), then fed to a second furnace (13), here the lead component is vaporised by heat treatment, said lead component is removed from the furnace by means of a scavenging gas flow and
the scavenging gas flow which is charged with the lead component is cooled down and filtered, and
then the zinc-bearing residual material is subjected to heat treatment in a third furnace (17) under reducing conditions, in that operation zinc oxide is reduced, with the formation of zinc vapours, the zinc component is removed from the furnace by means of a scavenging gas flow and the scavenging gas flow which is charged with the zinc component is cooled down and filtered.
characterised in that
when using a foundry dust which contains lead-alkali compounds or lead chlorides, the material to be treated is heated in the second furnace (13) only until vaporisation of the lead-alkali compounds or lead chlorides occurs and same are discharged with the scavenging gas flow.

2. A method according to claim 1 characterised in that the zinc-bearing residual material is subjected to heat treatment in the third furnace (17), mixed with a reducing agent in grain or dust form, in particular coal, and an oxygen-bearing atmosphere is maintained above the residual material-reducing agent mixture, in which atmosphere the vaporised zinc is oxidised to form zinc oxide and same is discharged with the scavenging gas flow.

3. A method according to claim 1 or claim 2 characterised in that the material to be treated is preheated and dried in the first furnace (11) before being introduced into the second furnace (13).

4. A method according to one of claims 1 to 3 characterised in that the foundry dust is pelletised before being introduced into the second and third furnaces (13, 11) respectively.

5. A method according to one of claims 1 to 4 characterised in that the material is indirectly heated in at least one of the furnaces (13, 17, 11) by way of heating chambers.

6. A method according to one of claims 1 to 5 characterised in that the material is rolled around in the heat treatment of the individual stages in at least one rotary cylindrical furnace (11, 13, 17).

7. A method according to claim 6 characterised in that in method stages with temperatures above 700°C the operation of rolling the material around is effected in a ceramic rotary cylindrical member of a rotary cylindrical furnace (13, 17).

8. A method according to claim 6 characterised in that in method stages with a temperature below 700°C the operation of rolling the material around is effected in a metal rotary cylindrical member of a rotary cylindrical furnace (11).

9. A method according to one of claims 1 to 8 characterised in that the treatment temperature in the second furnace is between 900°C and 1100°C.

10. A method according to one of claims 1 to 9 characterised in that the treatment time in the second furnace (13) is half an hour to one and a half hours.

11. A method according to one of claims 1 to 10 characterised in that the treatment temperature in the third furnace (17) is between 1100°C and 1400°C.

12. A method according to one of claims 1 to 11 characterised in that the treatment time in the third furnace is half an hour to two hours.

13. A method according to one of claims 1 to 12 characterised in that heated scavenging gas, in particular hot air (23) is fed to at least one of the furnaces (11, 13, 17).

14. A method according to claim 5 characterised in that the scavenging gas is heated by means of an indirect heat exchanger (20) by the hot waste gas from a heating chamber of a furnace (11).

15. A method according to one of claims 1 to 14 characterised in that the hot combustion waste air from the heating chambers of the third furnace (17) is fed to the heating mating chambers of the second and/or first furnace (13 and 11 respectively) as heating gas.

16. A method according to claim 5 characterised in that the hot combustion waste air from the heating chambers of the second furnace (13) is fed to the heating chambers of the first furnace (11) as heating gas.

## Revendications

1. Procédé pour l'élimination de plomb et de zinc à partir de poussières d'usines métallurgiques, en particulier à partir de poussières d'électrofours, pour lequel
la matière à traiter est éventuellement préchauffée dans un premier four (11), ensuite introduite dans un second four (13), le constituant de plomb y est évaporé par traitement thermique, celui-ci est éliminé du four au moyen d'un courant de gaz de rinçage et
le courant de gaz de rinçage chargé du constituant de plomb est refroidi et filtré,
la matière résiduelle contenant du zinc est ensuite thermiquement traitée dans un troisième four (17) dans des conditions réductrices, de l'oxyde de zinc est à cette occasion réduit avec formation de vapeurs de zinc, le constituant de zinc est éliminé du four au moyen d'un courant de gaz de rinçage et le courant de gaz de rinçage chargé du constituant de zinc est refroidi et filtré,
caractérisé en ce que lors de l'utilisation de poussières métallurgiques, qui contiennent des composés alcalins du plomb ou du chlorure de plomb, on chauffe la matière à traiter dans un second four (13) uniquement jusqu'à évaporation des composés alcalins du plomb ou du chlorure de plomb et on évacue ceux-ci avec le courant de gaz de rinçage.

2. Procédé selon la revendication 1, caractérisé en ce qu'on mélange la matière résiduelle contenant du zinc dans le troisième four (17) avec un agent réducteur en grains ou sous forme de poussière, en particulier du charbon, on la traite thermiquement et on maintient au-dessus du mélange matière résiduelle - agent réducteur - une atmosphère contenant de l'oxygène, dans laquelle le zinc évaporé s'oxyde en oxyde de zinc et on évacue celui-ci avec le courant de gaz de rinçage.

3. Procédé selon la revendication 1 ou 2, caractérisé en ce qu'on préchauffe et on sèche dans un premier four (11) la matière à traiter avant l'introduction dans le second four (13).

4. Procédé selon l'une quelconque des revendications 1 à 3, caractérisé en ce qu'on transforme en boulettes les poussières d'usines métallurgiques avant l'introduction dans le second ou le premier four (13 ou 11).

5. Procédé selon l'une quelconque des revendications 1 à 4, caractérisé en ce qu'on chauffe indirectement la matière dans au moins un des fours (13, 17, 11) par l'intermédiaire de chambres de chauffe.

6. Procédé selon l'une quelconque des revendications 1 à 5, caractérisé en ce qu'on fait circuler la matière lors du traitement thermique des étapes individuelles dans au moins un four tubulaire rotatif (11, 13, 17).

7. Procédé selon la revendication 6, caractérisé en ce qu'on réalise dans des étapes de procédé avec des températures supérieures à 700°C la circulation de la matière dans un tube rotatif céramique d'un four tubulaire rotatif (13, 17).

8. Procédé selon la revendication 6, caractérisé en ce qu'on réalise dans des étapes de procédé avec une température inférieure à 700°C la circulation de la matière dans un tube rotatif métallique d'un four tubulaire rotatif (11).

9. Procédé selon l'une quelconque des revendications 1 à 8, caractérisé en ce que la température du traitement dans le second four est comprise entre 900 et 1 100°C.

10. Procédé selon l'une quelconque des revendications 1 à 9, caractérisé en ce que la durée du traitement dans le second four (13) est comprise entre 1/2 h et 1 h 1/2.

11. Procédé selon l'une quelconque des revendications 1 à 10, caractérisé en ce que la température du traitement dans le troisième four (17) est comprise entre 1 100°C et 1 400°C.

12. Procédé selon l'une quelconque des revendications 1 à 11, caractérisé en ce que la durée du traitement dans le troisième four est comprise entre 1/2h et 2h.

13. Procédé selon l'une quelconque des revendications 1 à 12, caractérisé en ce qu'on introduit du gaz de rinçage chauffé, en particulier de l'air chaud (23), dans au moins un des fours (11, 13, 17).

14. Procédé selon la revendication 5, caractérisé en ce qu'on chauffe le gaz de rinçage au moyen d'un échangeur de chaleur indirect (20) par l'intermédiaire de l'air d'évacuation chaud d'une chambre de chauffe d'un four (11).

15. Procédé selon l'une quelconque des revendications 1 à 14, caractérisé en ce qu'on introduit l'air d'évacuation chaud de combustion provenant des chambres de chauffe du troisième four (17) dans les chambres de chauffe du second et/ou du premier four (13 ou 11) en tant que gaz de chauffage.

16. Procédé selon la revendication 5, caractérisé en ce qu'on introduit l'air d'évacuation chaud de combustion provenant des chambres de chauffe du second four (13) dans les chambres de chauffe du premier four (11) en tant que gaz de chauffage.
